# EUROPÄISCHE PATENTANMELDUNG

(11) **EP 0 737 835 A2**
(43) Veröffentlichungstag der Anmeldung: **16.10.1996**
(21) Anmeldenummer: 96100963.6
(22) Anmeldetag: 24.01.1996
(51) Int. Cl.: F16N 25/02

(54) **Verfahren zur Zu- und Umschaltung einer Reihe von Progressivverteilern, sowie Einrichtung zur Durchführung des Verfahrens**

(30) Priorität: 15.04.1995 DE 19514177
(71) Anmelder: BAIER & KÖPPEL GMBH & CO. Präzisionsapparate, D-91257 Pegnitz (DE)
(72) Erfinder: Pingel, Hans, D-91257 Pegnitz (DE)
(74) Vertreter: Richter, Bernhard, Dipl.-Ing.

(57) **Zusammenfassung**

Bei bekannten Verfahren zur Zu- und Umschaltung von zumindest zwei in Reihe geschalteten Progressivverteilern, die ein fließfähiges Medium Verbrauchern zuführen, erfolgt dies entweder durch elektrische Schaltung oder durch Handbetätigung. Das neue Verfahren soll die Zu- und Umschaltung des Verlaufes des fließfähigen Mediums durch die Progressivverteiler verbessern.

Erfindungsgemäß erfolgt die Steuerung der Zu- und Umschaltung mittels des fließfähigen Mediums selbst. Nach der Umschaltung des Flusses des unter Druck stehenden fließfähigen Mediums von einer ersten Leitungsführung auf eine weitere Leitungsführung durch die Progressivverteiler in der entgegengesetzten Fließrichtung werden die jeweils zuvor druckbeaufschlagten Leitungsführungen und zugehörigen Bereiche der Schaltanordnung, die zu Beginn des vorhergehenden Durchlaufes mit dem fließfähigen Medium gefüllt wurden, vom Druck entlastet und danach gegen einen Rückfluß des Mediums gesperrt. Zur Durchführung des Verfahrens ist eine hydraulisch betätigte Schaltanordnung vorgesehen, wobei zur Betätigung das fließfähige Medium dient.

Ein solcher Progressivverteiler wird bevorzugt zur Abgabe von Schmierstoffen an Schmierstellen einer Maschinenanlage oder eines Lastwagens eingesetzt.

## Beschreibung

Die Erfindung betrifft zunächst ein Verfahren zur Zu- und Umschaltung von zumindest zwei in Reihe geschalteten Progressivverteilern, die ein fließfähiges Medium, z.B. einen Schmierstoff oder ein Fett, Verbrauchern zuführen. Bisher hat man entweder durch elektrische Steuerung oder durch Handsteuerung zunächst die Einleitung des fließfähigen Mediums in diese Reihe von Progressivverteilern zugeschaltet. Sobald das fließfähige Medium diese Reihe durchlaufen und eine entsprechende Menge von Medium an die vom Progressivverteiler damit belieferten Verbraucher zugeführt wurde, hatte eine entsprechende Meldung seitens der Progressivverteiler zu erfolgen. Dann mußte entweder durch elektrische Schaltung (Katalog der Firma DROPSA S.P.A. Druckhinweis 800-12/89-7174792 Neuer Titel Serial 26 Zentralschmierung mit Progressiv Kolbenverteiler, Seite A 20) oder durch Handbetätigung eine Umkehr der Fließ- und Druckrichtung des fließfähigen Mediums bewirkt werden. Hiermit wurde ein zweiter Durchlauf des Mediums durch die Progressivverteiler erreicht, jedoch in einer Richtung, die der Flußrichtung des ersten Durchlaufes entgegengesetzt war. Auch bei diesem zweiten Durchlauf wurden von den Progressivverteilern her die Verbraucher mit dem fließfähigen Medium versorgt. Danch konnte eine Abschaltung erfolgen, oder aber es wurde der vorgenannte Zyklus entsprechend den jeweiligen Anforderungen wiederholt. Dies verlangte bei der elektrischen Steuerung einen entsprechenden apparativen Aufwand für die erforderliche Meldung der Funktion der Progressivverteiler und für die Umsteuerung selber. Eine Betätigung von Hand ist umständlich, erfordert eine zusätzliche Bedienungsperson und bedingt die Gefahr von Bedienungsfehlern.

Die Aufgaben- bzw. Problemstellung der Erfindung besteht demgegenüber darin, die Zu- und Umschaltung des Verlaufes des fließfähigen Mediums durch die Reihe von Progressivverteilern zu verbessern.

Zur Lösung dieser Aufgabe ist zunächst, ausgehend vom Oberbegriff des Anspruches 1, gemäß dem Kennzeichen des Anspruches 1 vorgesehen, daß die Steuerung der Zu- und Umschaltung mittels des fließfähigen Mediums erfolgt, daß nach der Umschaltung des Flusses des unter Druck stehenden fließfähigen Mediums von einer ersten Leitungsführung durch die Progressivverteiler in einer Fließrichtung auf eine weitere Leitungsführung durch die Progressivverteiler in der entgegengesetzten Fließrichtung die jeweils zuvor druckbeaufschlagten Leitungsführungen der Progressivverteiler und des zugehörigen Bereiches der Schaltanordnung , die zu Beginn des vorhergehenden Durchlaufes mit dem fließfähigen Medium gefüllt wurden, vom Druck entlastet und danach gegen einen Rückfluß des Mediums gesperrt werden und so fort. Hiermit wird vorteilhafterweise das sowieso vorhandene und den Progressivverteilern zu zu führende Medium in einer weiteren Funktion, nämlich zur Betätigung der vorstehend genannten Schaltvorgänge eingesetzt. Dies hat den Vorteil, daß das fließfähige Medium bei Erreichen eines bestimmten Stadiums oder Abschnittes seines Durchlaufes durch die Reihe von Progressivverteilern in dem genau richtigen Zeitpunkt die jeweils notwendige Schaltung betätigt. Dagegen kann bei einer Schaltung von Hand geschehen, daß dies zu früh oder zu spät erfolgt. Gegenüber der vorbekannten elektrischen Steuerung werden mit der Erfindung zusätzliche und damit teure, sowie auch störanfällige elektrische Melde- und Steuermittel vermieden. Diese Druckentlastung ist wichtig, um zu sichern, daß eine erneute Umschaltung eingeleitet und danach auch die Kette der Progressivverteiler vom fließfähigen Medium durchlaufen wird.

Der Erfindung liegt ferner die Aufgabe der Schaffung einer Einrichtung zugrunde, welche in vorteilhafter Weise die Durchführung des vorgenannten Verfahrens ermöglicht. Zur Lösung dieser Aufgabe dient zunächst eine Einrichtung gemäß Anspruch 2, wonach eine hydraulisch betätigte Schaltanordnung vorgesehen ist und daß zur Betägigung dieser Schaltanordnung das fließfähige Medium dient, wobei die Schaltanordnung Mittel für die Zufuhr oder Abfuhr des fließfähigen Mediums aus einem oder in ein Reservoir und ferner Ein- und Ausgänge für die Zuleitung oder Ableitung des fließfähigen Mediums zu den oder von den Progressivverteilern aufweist. Eine solche hydraulische Schaltanordnung ist als Baueinheit herstellbar und entsprechend den örtlichen Verhältnissen problemlos zu montieren, sowie mit der Reihe der Progressivverteiler und dem das fließfähige Medium enthaltenden Reservoir zu verbinden.

In weiterer Ausgestaltung der Erfindung kann die hydraulische Schaltanordnung auch zur bereits erwähnten Druckentlastung vorgesehen sein, wenn nach einem von der Eingangsseite der Reihe von Progressivverteilern her kommenden Durchlauf des fließfähigen Mediums durch die Reihe der Progressivverteiler die Fließrichtung des Mediums umgekehrt und damit ein zweiter oder weiterer Durchlauf in entgegengesetzter Richtung eingeleitet wird. Dabei ist es in baulicher und auch funktioneller Hinsicht von Vorteil, wenn die Mittel der Druckentlastung sich in der Schaltanordnung befinden und dabei mit den Mitteln zusammenwirken, welche für die Steuerung der Zu- und Umschaltung des fließfähigen Mediums vorgesehen sind.

Weitere Vorteile und Merkmale der Erfindung sind den weiteren Unteransprüchen, sowie der nachfolgenden Beschreibung und der dazugehörigen Zeichnung von erfindungsgemäßen Ausführungsmöglichkeiten zu entnehmen. In der im wesentlichen schematischen Zeichnung zeigen die Figuren jeweils eine Reihe aus zwei Progressivverteilern mit einer Schaltanordnung, und zwar:
- Fig. 1:: in einem Stadium, in dem noch kein fließfähiges Medium zugeführt ist,
- Fig. 2:: der Beginn der Zufuhr des fließfähigen Mediums,
- Fig. 3:: das Stadium, in dem das fließfähige Medium beide Progressivverteiler 1, 2 durchlaufen hat und auf die Umschalteinrichtung fördert,
- Fig. 4:: die Umschaltung des ersten Steuerkolbens 30 nach Erreichen des Druckes am Druckbegrenzungsventil 27,
- Fig. 5:: die Umschaltung des zweiten Steuerkolbens 34 für die Fließrichtung,
- Fig. 6:: die Umkehr der Fließrichtung und Beginn der Entlastung des Druckes des Mediums im ersten Progressivverteiler 1 und in der linken Seite bzw. Hälfte der Schaltanordnung 3,
- Fig. 7:: das Stadium, in dem die Entlastungsphase abgeschlossen ist und die entsprechenden Leitungen der linken Hälfte der Schaltanordnung nicht mehr unter Druck stehen. Das fließfähige Medium hat beide Progressivverteiler durchlaufen und fördert auf die Umschalteinrichtung,
- Fig. 8:: die Umschaltung des ersten Steuerkolbens 31 nach Erreichen des Druckes am Druckbegrenzungsventil 27,
- Fig. 9:: die Umschaltung des zweiten Steuerkolbens 35 für die Fließrichtung,
- Fig. 10:: Entlastung des Druckes des fließfähigen Mediums im zweiten Progressivverteiler 2 und in der rechten Hälfte der Schaltanordnung, sowie Beginn der Zufuhr des fließfähigen Mediums in der linken Hälfte der Schaltanordnung und damit zur Eingangsseite 1' des Progressivverteilers 1.

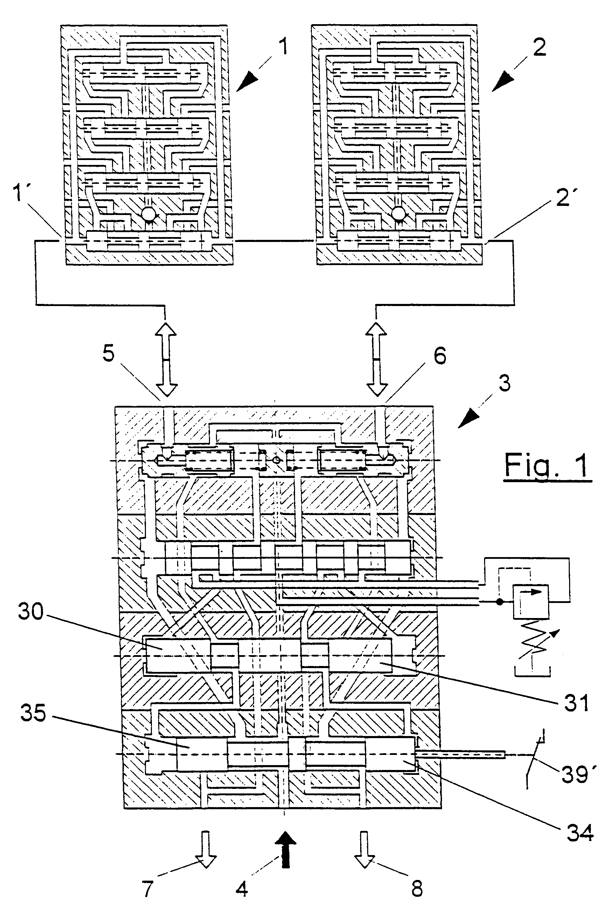

Fig. 1 zeigt das Ausführungsbeispiel einer Anordnung nach der Erfindung, bestehend aus einer Reihe (hier zwei) von Progressivverteilern 1, 2 und einer hydraulischen Schaltanordnung 3. Das fließfähige Medium wird gemäß Pfeil 4 der Schaltanordnung 3 zugeführt. Diese hat mit den Progressivverteilern 1, 2 verbundene Ein- bzw. Ausgänge 5, 6, wobei der Ein- oder Ausgang 5 mit der Seite 1' des ersten Progressivverteilers 1 und der Ein- oder Ausgang 6 mit der Seite 2' des Progressivverteilers 2 verbunden ist - Wenn die Progressivverteiler vom fließfähigen Medium durchflossen werden, geben sie dieses in einer im einzelnen nicht dargestellten Weise an Verbraucher ab. Bevorzugt werden solche Progressivverteiler bzw. Reihenanordnungen von Progressivverteilern zur Abgabe von Schmierstoffen an Schmierstellen, z.B. einer Maschinenanlage oder eines Lastwagens, eingesetzt. Deswegen und auch zur sprachlichen Vereinfachung wird im nachfolgenden für das fließfähige Medium als beispielsweise bevorzugte Anwendung die eines Schmierstoffes eläutert. Die Schaltanordnung ist ferner mit Abflüssen 7, 8 zu dem in der Zeichnung nicht dargestellten Reservoir versehen. Die Fig. 1 zeigt die Null-Stellung, in der sich noch kein Schmierstoff in der Schaltanordnung und den Progressivverteilern befindet.

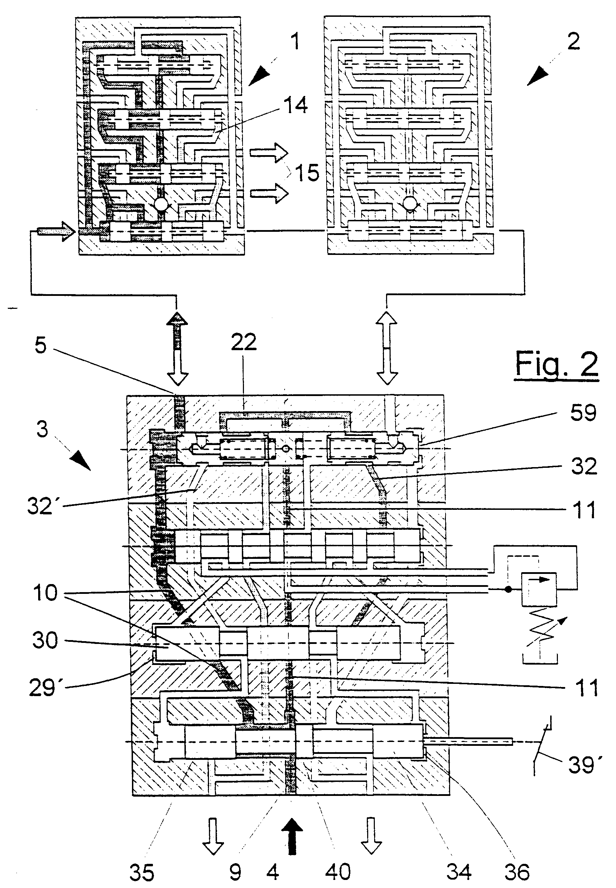

Im Stadium gemäß Fig. 2 wird der aus dem Reservoir in Pfeilrichtung 4 zugeführte Schmierstoff über die Leitungen 9 und 10 dem Ausgang 5 zugeleitet, und zwar mit Hilfe einer in der Zeichnung ebenfalls nicht dargestellten, zwischen dem Reservoir und der Schaltanordnung vorgesehenen Fördereinrichtung, z.B. einer Druckpumpe. Der Schmierstoff hat im Stadium der Fig. 2 begonnen, den Progressivverteiler 1 zu füllen. Außerdem hat der Schmierstoff weitere Leitungen 11, 22, 32 der Schaltanordnung gefüllt, deren Funktion weiter unten erklärt werden wird. Die vorgenannten, mit Schmierstoff gefüllten Leitungen sind dunkelgrau gepunktelt gezeichnet. Die in dem Progressivverteiler 1 rechte Hälfte mit einer hellgrauen Punktelung gezeichneten Leitungen 14 sind ebenfalls mit dem Schmierstoff bereits gefüllt und versorgen die Verbraucher (siehe auch die Pfeile 15).

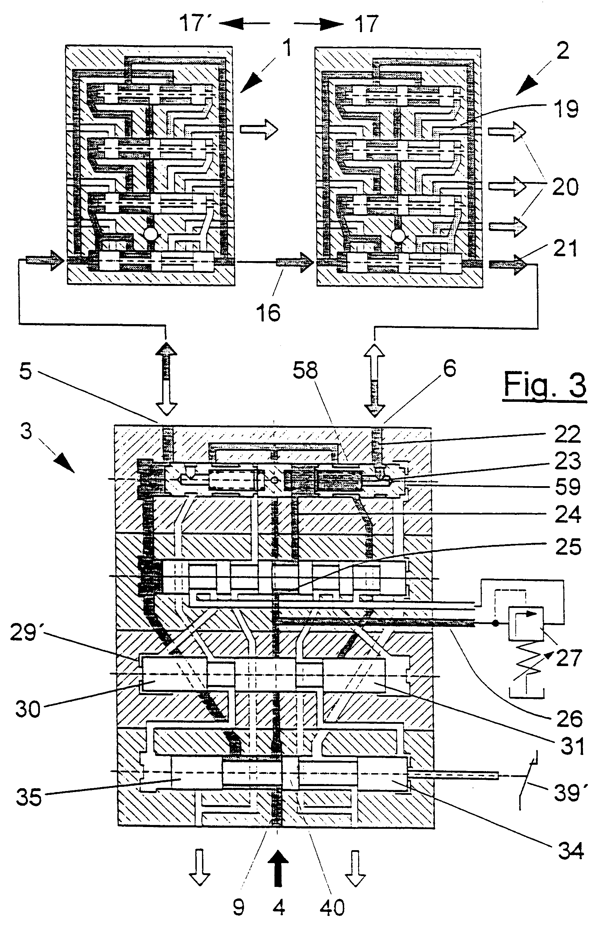

Fig. 3 zeigt ein Stadium, in dem mit dem weiteren Fluß des Schmierstoffes gemäß Pfeil 16 auch der in dieser Flußrichtung 17 des Schmierstoffes nachfolgende Progressivverteiler 2 mit dem Schmierstoff gefüllt ist (dunkelgraue Punktelung) Die zur Weiterführung des Schmierstoffes an die hieran angeschlossenen Verbraucher dienenden Leitungen 19 sind mit einer hellgrauen Punktelung gekennzeichnet. Ferner wird die Weiterleitung dieses Schmierstoffes an die vom Progressivverteiler 2 gespeisten Verbraucher durch die hellgrau markierten Pfeile 20 angedeutet. Der nicht zu den Verbrauchern geführte Schmierstoff des Progressivverteilers 2 wird gemäß Pfeil 21 dem Eingang 6 der Schaltanordnung 3 zugeführt. Es sei an dieser Stelle darauf hingewiesen, daß die in Fig. 3 mit einer dunkelgrauen Punktelung gekennzeichneten Leitungen Schmierstoff aufweisen, der unter dem Druck der Förderpumpe oder dergleichen stehen, welche den Schmierstoff gemäß Pfeil 4 der Schaltanordnung zuführt.

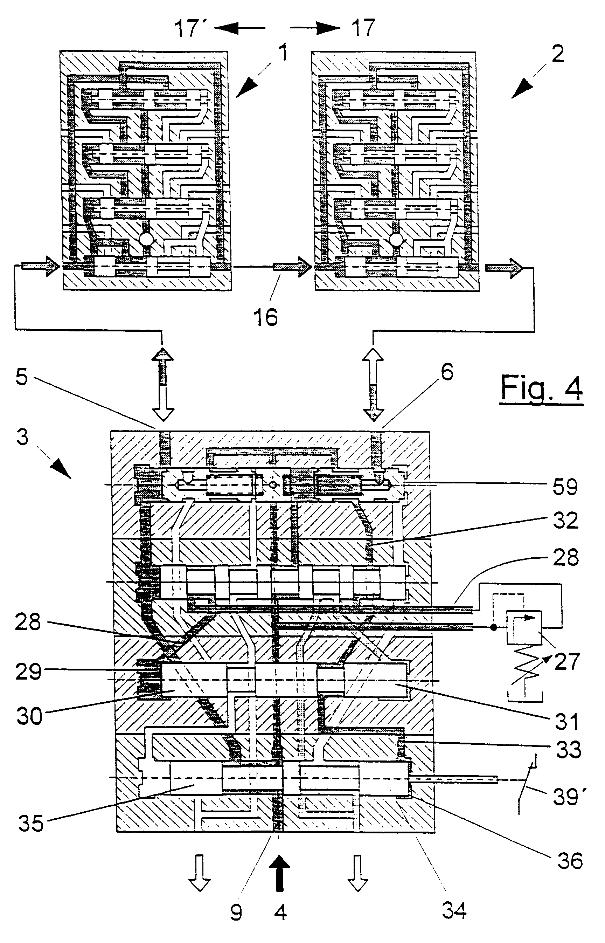

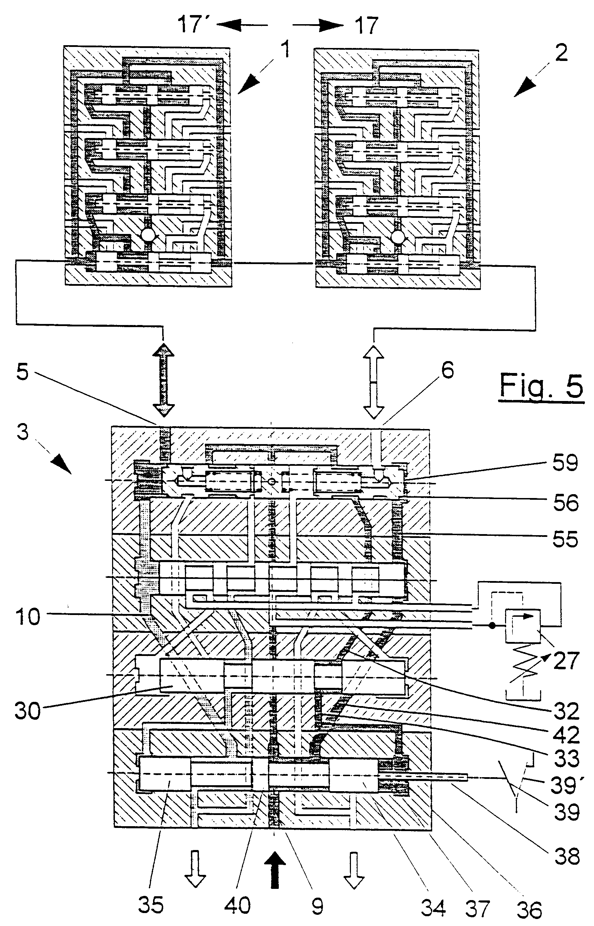

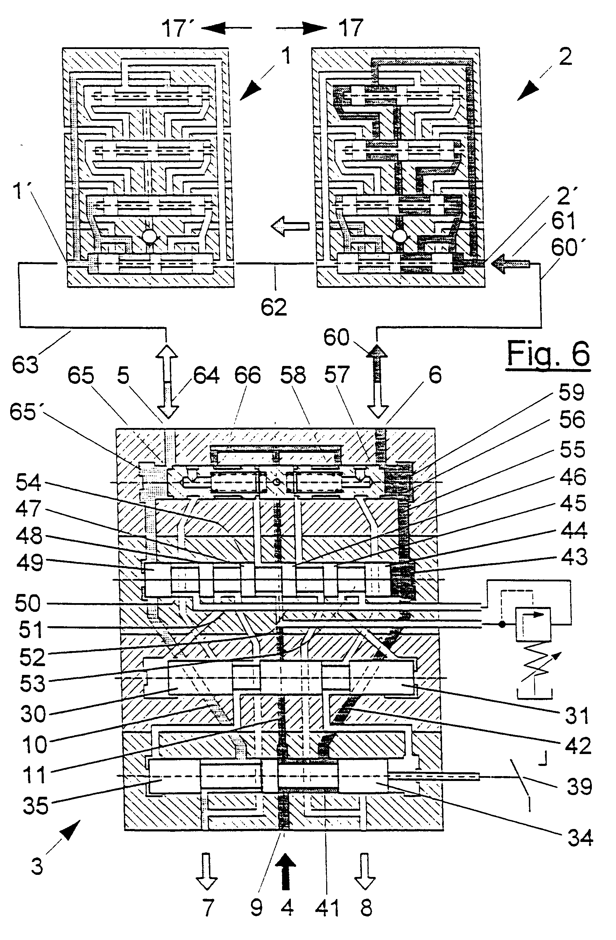

Vom Eingang 6 der Schaltanordnung her gelangt innerhalb der Schaltanordnung der druckbeaufschlagte Schmierstoff über die Leitungen bzw. entsprechende Räume 22 bis 26 zu der Eingangsseite eines Druckbegrenzungsventiles 27 und steht dort gemäß Fig. 3 an. Das Druckbegrenzungsventil 27 ist so ausgestaltet, daß es dem Schmierstoff einen definierten, konstanten Druck für die nachfolgend zu erläuternde Umschaltung gibt. Ist dies erfolgt, so fließt gemäß Fig. 4 von der Ausgangsseite des Druckbegrenzungsventiles her der Schmierstoff über eine Leitung 28 in eine Druckkammer 29. Diese Druckkammer 29 ist im linken Endbereich der Führung eines Kolbens 30 einer ersten Kolbensteueranordnung 30, 31 gelegen. Diese Kolbensteueranordnung 30, 31 wird in ihre rechte Endstellung geschoben (siehe Fig. 4). Hierzu ist in Fig. 2 bereits die Druckkammer 29 angedeutet, die in dieser Position aus einem Spalt 29' geringer Dicke für die Aufnahme des unter Druck stehenden Schmierstoffes besteht. Mit der Verschiebung des ersten Steuerkolbens 30 in die Position der Fig. 4 wird von dem hiermit starr verbundenen und entsprechend nach rechts verschobenen Kolben 31 eine Leitungsverbindung 32, 33 freigegeben, welche eine weitere, zweite Kolbensteueranordnung 34, 35 betätigt. Diese beiden Kolben 34, 35 sind ebenfalls starr miteinander verbunden. Durch die Öffnung der Leitungsverbindung 32, 33 gelangt der unter Druck stehende Schmierstoff in den rechten Endbereich 36 einer Druckkammer 37, so drückt dies die Kolbensteueranordnung 34, 35 nach links, so daß sie aus der Position der Fig. 2 bis 4 in die Position der Fig. 5 verschoben wird. Dies ist die erste Stufe der Umschaltung. Hiermit werden zwei Schaltfunktionen betätigt. Zum einen wird durch eine am Kolben 34 befestigte Stange 38 ein elektrischer Schalter 39 von seiner in Fig. 5 gestrichelten "Ein"-Stellung 39' in die mit durchgezogenen Linien dargestellte "Aus"-Stellung 39 bewegt. Hiermit wird angezeigt, daß nunmehr die Umschaltung der ursprünglichen Fließrichtung 17 des Schmierstoffes in die umgekehrte Fließrichtung 17' erfolgt ist. Die betreffenden Leitungen sind dunkel punktiert. Außerdem wird ein hierbei mitbewegter, weiterer Kolben 40 dieser Kolbensteueranordnung aus seiner Stellung gemäß Fig. 2 bis 4 nach links in eine Lage gemäß Fig. 5 verschoben. In dieser Position sperrt er die im Stadium laut Fig. 2 gegebene Fließverbindung des Schmierstoffes über die Leitung 9 zur Leitung 10. Nun erfolgt eine Strömung des bei 4 zufließenden Schmierstoffes von der Leitung 9 über einen ringzylindrischen Raum 41 und eine Leitung 42 in die in den Zeichnungen rechte Hälfte der Schaltanordnung 3, wobei aber der Zufluß des Schmierstoffes über die Leitung 9 zur Leitung 11 auch in dieser Schaltstellung beibehalten bleibt. Der Schmierstoff gelangt von der Leitung 42 in den zunächst relativ schmalen Spalt einer Druckkammer 43 einer weiteren, dritten Kolbensteueranordnung 44, 49. Hiermit wird der Kolben 44 dieser Kolbensteueranordnung durch den Druck des Schmierstoffes in der Druckkammer 43 nach links bewegt, womit er die zu dieser Kolbensteueranordnung gehörenden weiteren Kolben 45, 46, 47, 48 und 49 mit nach links verschiebt, bis sie in die Position gemäß Fig. 6 gelangen. Diese einzelnen Kolben sind über Zwischenglieder 50, 51, 52 und 53 starr miteinander verbunden, wobei der Durchmesser der Zwischenglieder etwas kleiner ist als der Durchmesser der Kolben. Damit besteht zwischen dem Außen umfang der Zwischenglieder und dem Innenumfang der diese Kolbensteueranordnung führende Bohrung 54 jeweils ein Ringraum, der zur Führung des Schmierstoffes dienen kann. Die zuvor beschriebene Anordnung aus Steuerkolben und Zwischengliedern mit diese umgebenden Ringräumen ist, wie die Zeichnungen zeigen, auch bei den übrigen, bereits erläuterten Kolbensteueranordnungen mit den Steuerkolben 30, 31 und 34. 35 vorhanden.

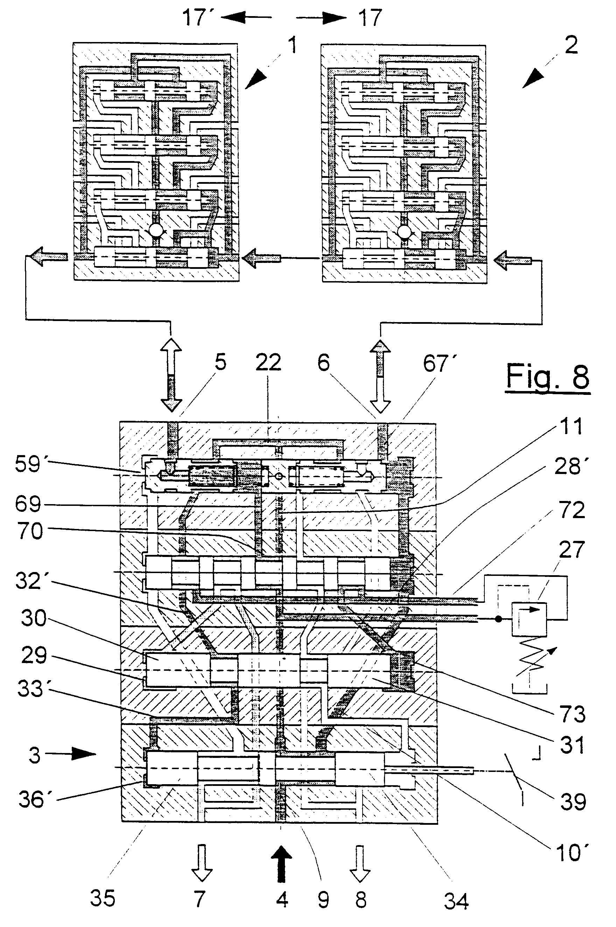

Mit der vorgenannten Verschiebung der Kolbensteueranordnung 44, 49 wird gemäß Fig. 6 die Druckkammer 43 entsprechend vergrößert, so daß der Schmierstoff von der Leitung 42 über die Druckkammer 43 und eine weitere Leitung 55 in eine weitere Druckkammer 56 gelangt, die sich in der Zeichnung auf der rechten Seite eines weiteren Kolbens 57 befindet. Der Kolben 57 war von einer Feder 58 in seine in Fig. 3 dargestellte Lage gedrückt worden, in der er an einem Widerlager 59 anliegt. Der Druck des Schmierstoffes in der Druckkammer 56 bewirkt nun ein Verschieben des Kolbens 57 gegen Wirkung der Feder 58 nach links, bis er die in Fig. 6 dargestellte Lage einnimmt. Dies ist die zweite Stufe der Umschaltung. Damit wird der Raum der Druckkammer 56 vergrößert und außerdem eine Durchtrittsöffnung von ihr zu einer Leitung 67' (siehe Fig. 8) freigegeben, die zum Austritt 6 der Schaltanordnung führt und hierdurch einen Austritt des unter Druck stehenden Schmierstoffes gemäß Pfeil 60 aus der Schaltanordnung über eine Leitung 60' und den Eintritt gemäß Pfeil 61 in den Progressivverteiler 2 ermöglicht. Der Schmierstoff fließt dann in der Richtung 17' von der in Fig. 6 rechten Eingangsseite 2' des Progressivverteilers 2 durch diesen hindurch, über eine weitere Leitung 62 in den Progressivverteiler 1 und aus der links gelegenen Seite 1' des Progressivverteilers 1 über eine Leitung 63 gemäß Pfeil 64 in den Eingang 5 der Schaltanordnung. Beim Fließen des Schmierstoffes in der Richtung 17' erfolgt ebenfalls eine Schmierstoffzufuhr zu den an die Progressivverteiler angeschlossenen Verbrauchern. Hierzu wird auf die vorhergehenden Ausführungen verwiesen.

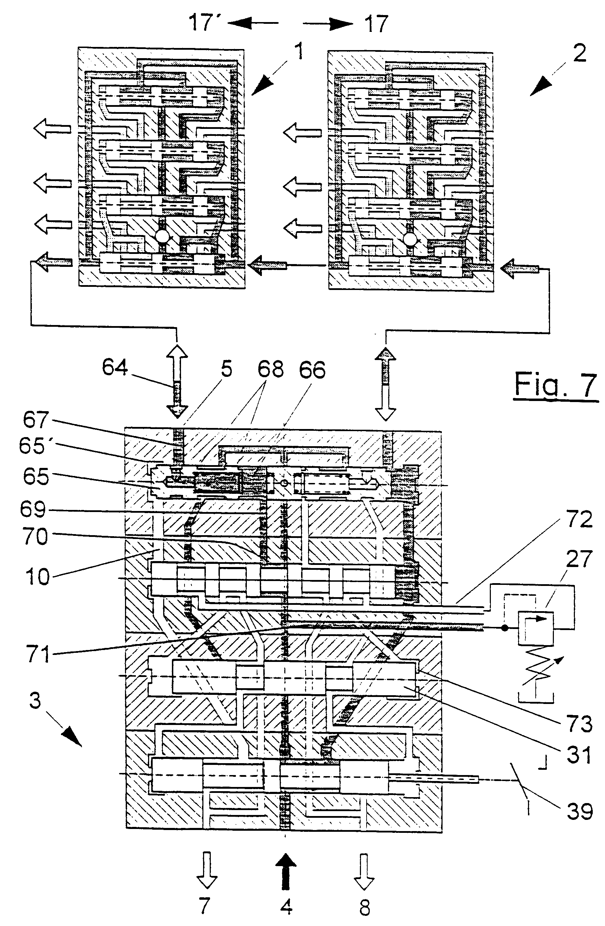

Während der Phase der Figuren 5 und 6 stehen die Leitungen 62 und 63 in Pfeilrichtung 64, sowie die Leitungen 10 der Schaltanordnung noch unter einem gewissen Druck, der aus der Phase der Förderung des Schmierstoffes gemäß Flußrichtung 17 herrührt. Hierdurch wird ein Kolben 65 gegen Wirkung einer Feder 66 in der in den Fig. 2, 3, 4, 5 und 6 dargestellten Lage gehalten. Da, wie vorstehend erläutert, in der Phase gemäß Fig. 5 die Zufuhr des Schmierstoffes von der Leitung 9 zur Leitung 10 unterbrochen wird, kann sich somit der im linken Bereich der Schaltanordnung und im Progressivverteiler befindliche, durch hellgraue Punktelung dargestellte Schmierstoff nach unten über die Leitung 10 und über den Austritt 7 entladen und in das Reservoir zurückfließen. Sobald mit dieser Entladung der Druck in den Leitungen 10 und damit auch in einer weiteren Druckkammer 65', die an die Stirnseite des Kolbens 65 angrenzt, unter einen bestimmten Wert sinkt, drückt die Feder 66 den Kolben 65 in die Position gemäß Fig. 7, in welcher die Verbindung vom Einlaß 5 zur Leitung 10 unterbrochen ist. Entsprechend sind diese Schmierstofführungen im Querschnitt weiß gezeichnet. Hiermit ist die Entlastungsphase beendet. Erfolgt die Druckentlastung nicht, so kann es geschehen, daß der zuvor aufgebaute Druck über das Druckbegrenzungsventil 27 eine erneute Umschaltung einleitet, ohne daß zuvor die Kette der Progressivverteiler vom Schmierstoff durchlaufen wird.

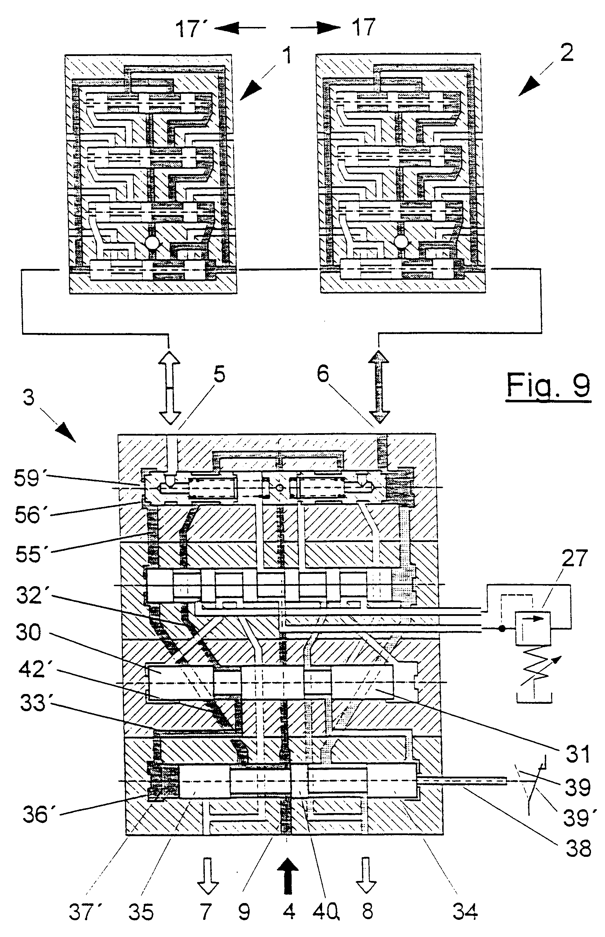

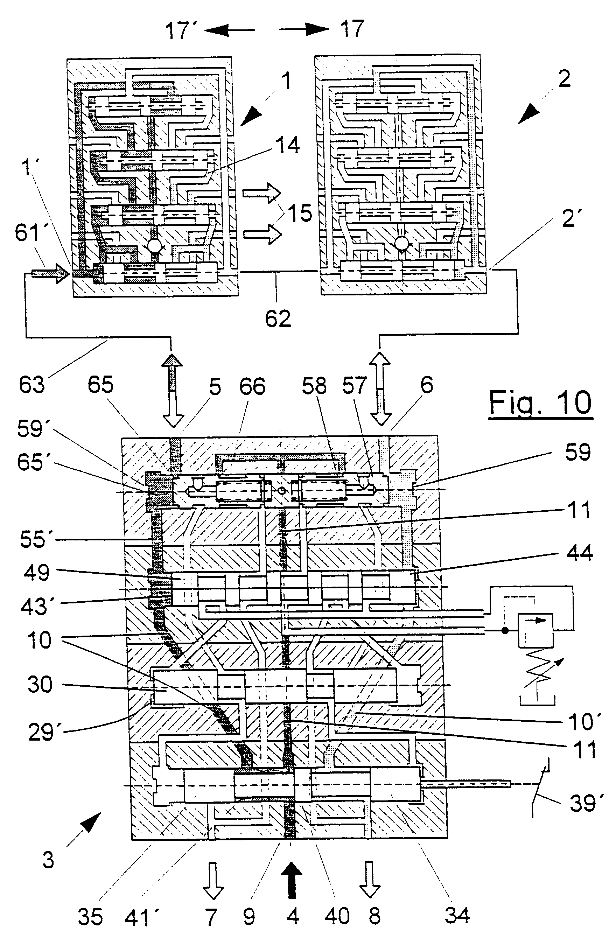

Der in Pfeilrichtung 64 fließende Schmierstoff wird (siehe Fig. 7) dann über die Leitung 67 und eine Bohrung 68, eine Leitung 69, einen Ringraum 70 und eine weitere Leitung 71 dem Druckbegrenzungsventil 27 zugeführt. Der hiermit auf den gewünschten Druck eingeregelte Schmierstoff wird dann gemäß Fig. 8 über die Leitung 72 zu einer Druckkammer 73 geführt, die sich gegenüber der rechten Stirnfläche des Steuerkolbens 31 der ersten Steuerkolbenanordnung 30, 31 befindet, wodurch die Steuerkolbenanordnung 30, 31 in die Ausgangslage gemäß Fig. 2 verschoben wird (siehe Fig. 8). Dies hat eine Öffnung des Leitungsweges 9, 11, 22, 32' und 33' zum Spalt der Druckkammer 36' zur Folge. dies bewirkt eine Bewegung der zweiten Steuerkolbenanordnung 34, 35 in die Lage gemäß den Fig. 1, 2 und damit ein Bringen des Schalters 39 in die Lage 39' zur Folge. Wie in der Zeichnung gstrichelt dargestellt sind die Leitungen 32 und 32' in der Blickrichtung des Betrachters hinter der Steuerkolbenanordnung 44, 48 entlanggeführt, sie haben damit also keine Verbindung. Die Leitungen 11 und 13 stehen ständig unter dem Druck des Schmierstoffes, um beispielsweise im Stadium der Fig. 8 über die weitere Leitung 22, einen zylindrischen Ringraum und die Leitungen 32', 33' einen unter Druck stehenden Schmierstoff in die Druckkammer 36' bringen zu können. Dieser Weg kann, wie erläutert, durch entsprechende Steuerung des Kolbens 65 freigegeben werden. Sinngemäß das gleiche gilt für die Freigabe der Leitungsführung 32, 33 in der rechten Hälfte der Schaltanordnung (siehe hierzu Fig. 5-7). Die zuletzt genannte Stellung ist in Fig. 9 dargestellt, einschl. der dunkel gepunktelten Führung des Schmierstoffes in den betreffenden Leitungen. Es erfolgt dann in den rechten Hälften der Fig. 9, 10 eine Druckentlastung in sinngemäß der gleichen Weise, wie es bei in Pfeilrichtung 17 geflossenem Schmierstoff anhand der Fig. 5, 6 dargestellt und beschrieben ist. Nur sind hierbei die Funktionen in der linken Hälfte und in der rechten Hälfte der Schaltanordnung miteinander vertauscht.

Der Schmierstoff in den hellgrau gepunktelten Leitungen fließt bei 8 zum Reservoir ab. Sinkt in dieser Leitung der Druck unter einen bestimmten Wert, so drückt die Feder 58 den Kolben 57 in die Position gemäß Fig. 3 und ein neuer Zyklus beginnt, bei dem der Schmierstoff - wie zuvor anhand der Fig. 3 bis 5 beschrieben - in der Pfeilrichtung 17 fließt. Danach erfolgt die anhand der Fig. 6, 7 erfolgte Umkehr der Fließrichtung 17 in die Fließrichtung 17' usw.

Wenn der Ablauf dieser Zyklen nicht unterbrochen wird, kann sich dies beliebig oft wiederholen.

In der Funktion entsprechen sich also die Figuren wie folgt, wobei aber jeweils, wie vorstehend bereits erwähnt, die Funktionen der beiden Hälften der Schaltanordnung gegeneinander vertauscht sind und wobei ferner die Fließrichtung des Schmierstoffes entgegengesetzt ist:
Fig. 3 entspricht Fig. 7
Fig. 4 entspricht Fig. 8
Fig. 9 entspricht Fig. 5
Fig. 10 entspricht Fig. 6.

Um dies auch in der Bezifferung zu verdeutlichen, sind im übrigen einige Leitungen in den Figuren 7 bis 10 mit den gleichen Bezugsziffern wie in den Fig. 3 bis 6 bezeichnet und dabei mit einem Beistrich versehen.

In Fig. 7 der dunkel gepunktelte Zulauf 71 zum Druckentlastungsventil 27 ebenso vorgesehen wie der entsprechende Zulauf 26 in Fig. 3. Fig. 8 zeigt, daß das Druckentlastungsventil 27 auch den Rücklauf 72 mit unter Druck stehenden und daher dunkel gepunktelten Schmierstoff 72 hat. Dem entspricht der Rücklauf 28 in Fig. 4 usw.

Es erfolgt also nach Beginn der Einschaltung zunächst ein vollständiges Durchlaufen des Schmierstoffes durch die beiden Progressivverteiler 1, 2 in der Pfeilrichtung 17, danach eine selbstätige hydraulische Umschaltung und Richtungsumkehr des Fließens des Schmierstoffes, sowie gleichzeitig eine Entlastung der Leitungen der Progressivverteiler und des Bereiches der Schaltanordnung, die vom Durchlaufen des Schmierstoffes in der ersten Pfeilrichtung 17 her noch mit unter Druck stehendem Schmierstoff gefüllt sind.

Ist der Schmierstoff nach der Umkehr in die Gegenrichtung 17' durch die Progressivverteiler 2, 1 durchgeflossen, so ergibt sich dann beim Stadium der Fig. 9, 10 eine erneute Umschaltung und Druckentlastung, um dann automatisch wieder in einen neuen Zyklus überzugehen, der gemäß Fig. 3 mit einem Fließen des Schmierstoffes in der Pfeilrichtung 17 beginnt. Dies kann, wie gesagt, beliebig oft wiederholt werden. Es ist ein wesentlicher Vorteil der beschriebenen Einrichtung, daß diese Vorgänge selbsttätig durch entsprechende Betätigung der Steuerkolbenanordnungen und Steuerkolben in der gewünschten Weise erfolgen.

Die Einschaltung dieser Gesamtanordnung kann zeitabhängig, aber auch taktabhängig erfolgen. Dies wird in der Regel automatisch geschehen. Das gleiche gilt für die Abschaltung, wenn diese entsprechend vorprogrammiert ist. Die Abschaltung erfolgt über den Schalter 39. Falls erwünscht kann aber die Einschaltung und die Abschaltung auch von Hand vorgenommen werden.

Es ist, wie bereits erwähnt, für die Entlastung der zuvor druckbeaufschlagten Eingangsseite des betreffenden Progressivverteilers und schließlich auch für eine Anzeige der Umschaltung gesorgt.

Alle dargestellten und beschriebenen Merkmale, sowie ihre Kombinationen miteinander, sind erfindungswesentlich.

## Patentansprüche

1. Verfahren zur Zu- und Umschaltung von zumindest zwei in Reihe geschalteten Progressivverteilern, die ein fließfähiges Medium, bevorzugt einen Schmierstoff, Verbrauchern zuführen, dadurch gekennzeichnet, daß die Steuerung der Zu- und Umschaltung mittels des fließfähigen Mediums erfolgt, daß nach der Umschaltung des Flusses des unter Druck stehenden fließfähigen Mediums von einer ersten Leitungsführung durch die Progressivverteiler (1, 2) in einer Fließrichtung (17) auf eine weitere Leitungsführung durch die Progressivverteiler (2, 1) in der entgegengesetzten Fließrichtung (17') die jeweils zuvor druckbeaufschlagten Leitungsführungen der Progressivverteiler und des zugehörigen Bereiches der Schaltanordnung, die zu Beginn des vorhergehenden Durchlaufes mit dem fließfähigen Medium gefüllt wurden, vom Druck entlastet und danach gegen einen Rückfluß des Mediums gesperrt werden und so fort.

2. Einrichtung zur Durchführung des Verfahrens nach Anspruch 1, dadurch gekennzeichnet, daß eine hydraulisch betätigte Schaltanordnung (3) vorgesehen ist und daß zur Betätigung dieser Schaltanordnung das fließfähige Medium dient, wobei die Schaltanordnung Mittel (4; 7, 8) für die Zufuhr oder Abfuhr des fließfähigen Mediums aus einem oder in ein Reservoir und ferner Ein- und Ausgänge (5, 6) für die Zuleitung oder Ableitung des fließfähigen Mediums zu den oder von den Progressivverteilern (1, 2) aufweist.

3. Einrichtung nach Anspruch 2, dadurch gekennzeichnet, daß die Schaltanordnung (3) eine erste Verbindungsleitung (9, 10) aufweist, welche die Zufuhr (4) des fließfähigen Mediums und einen Ausgang/Eingang (5) der Schaltanordnung miteinander verbindet, daß dieser Ausgang der Schaltanordnung mit dem Eingang (1') der Reihe der Progressivverteiler (1, 2) über eine das fließfähige Medium führende Leitung (63) verbunden ist und daß die Ausgangsseite (2') der Reihe der Progressivverteiler (1, 2) über eine weitere, das fließfähige Medium führende Leitung (61') mit einem Eingang/Ausgang (6) der Schaltanordnung verbunden ist.

4. Einrichtung nach Anspruch 2 oder 3, gekennzeichnet durch vom fließfähigen Medium betätigte Schiebersteuerungen (30, 31; 34, 35; 44, 49; 57, 65) zur Sperrung oder Freigabe des Zuflusses/Abflusses des fließfähigen Mediums aus der Schaltanordnung (3) zu oder von den Progressivverteilern (1, 2).

5. Einrichtung nach Anspruch 4, dadurch gekennzeichnet, daß die Schiebersteuerungen als Kolbensteueranordnungen (30, 31; 34, 35; 44, 49) ausgebildet sind.

6. Einrichtung nach Anspruch 4 oder 5, gekennzeichnet durch eine erste Schiebersteuerung (30, 31), welche von dem aus dem Reservoir zufließenden (4) Medium, oder von dem aus der Progressivverteilerreihe rückfließenden (64) Medium betätigt wird.

7. Einrichtung nach einem der Ansprüche 4 bis 6, dadurch gekennzeichnet, daß eine zweite Schiebersteuerung (34, 35) vorgesehen ist, wobei durch das Verstellen der ersten Schiebersteuerung (30, 31) die Freigabe einer Leitungsverbindung (32, 33; 32', 33') erfolgt und daß diese Leitungsverbindung das druckbeaufschlagte Medium zur zweiten Schiebersteuerung (34, 35) führt derart, daß diese zweite Schiebersteuerung hiervon in eine der Umschaltung der Fließrichtung des Mediums dienende Position verstellt wird.

8. Einrichtung nach Anspruch 7, dadurch gekennzeichnet, daß die zweite Schiebersteuerung (34, 35) in ihrer Umschaltposition eine elektrische Schaltanzeige (39) betätigt.

9. Einrichtung nach Anspruch 7 oder 8, dadurch gekennzeichnet, daß die zweite Schiebersteuerung (34, 35) in der Umschaltposition die Fließverbindung (9, 10, 9, 10') des fließfähigen Mediums zur bisherigen Eingangsseite (1; 2') der Progressivverteiler (1, 2) sperrt und eine Strömung des zufließenden (4) Mediums zur bisherigen Ausgangsseite (2', 1') der Progressivverteilerreihe (1, 2) öffnet, wobei mit dieser Umschaltung die Strömung des Mediums in der ersten Strömungsrichtung (17; 17') unterbrochen und dafür eine Strömung des Mediums in einer gegenläufigen Richtung (17'; 17) erfolgt.

10. Einrichtung nach Anspruch 9, dadurch gekennzeichnet, daß für die Freigabe des Zuflusses des Mediums in die bisherige Ausgangsseite (2'; 1') der Progressivverteiler (1, 2) eine dritte Schiebersteuerung (44 - 49) vorgesehen ist.

11. Einrichtung nach einem der Ansprüche 2 bis 10, dadurch gekennzeichnet, daß die Schaltanordnung (3) ebenfalls vom fließfähigen Medium betätigte Mittel (65, 66; 57, 58) aufweist, um das unter Druck stehende fließfähige Medium in einem ersten Progressivverteiler (1; 2) der Progressivverteilerreihe von seinem Druck zu entlasten, sobald nach Umkehrung der bisherigen Fließrichtung (17; 17') in die gegenläufige Fließrichtung (17', 17) das unter Druck zuströmende fließfähige Medium in den zweiten Progressivverteiler (2; 1) einfließt.

12. Einrichtung nach Anspruch 11, dadurch gekennzeichnet, daß die Sperrung oder Freigabe des unter Druck des fließfähigen Mediums stehenden Bereiches des ersten Progressivverteilers (1; 2) und den zugehörigen Ableitungen (67, 10; 67, 10') der Schaltanordnung durch einen unter Federdruck (66; 58) stehenden Steuerkolben (65; 57) erfolgt, wobei die Federkraft entsprechend auf die Druckkraft des Mediums abgestimmt ist.

13. Einrichtung nach einem der Ansprüche 2 bis 12, dadurch gekennzeichnet, daß die Kolbensteueranordnungen (30, 31; 34, 35; 44, 49) von zumindest einer, das unter Druck stehende Medium führenden Druckkammer her betätigt werden, wobei die Druckkammer in der Verschieberichtung der jeweiligen Kolbensteueranordnung und angrenzend an die Stirnfläche des betreffenden Steuerkolbens positioniert ist.

14. Einrichtung nach einem der Ansprüche 2 bis 13, dadurch gekennzeichnet, daß im jeweiligen Leitungsweg des fließfähigen, unter Druck stehenden Mediums ein Druckbegrenzungsventil (27) vorgesehen ist.

15. Einrichtung nach Anspruch 14, gekennzeichnet durch eine Ausgestaltung des Druckbegrenzungsventiles (27) derart, daß es dem fließfähigen Medium einen definierten, konstanten Druck für die nachfolgende Umschaltung gibt.

16. Einrichtung nach einem der Ansprüche 3 bis 15, gekennzeichnet durch eine automatische Steuerung des Fließen des Mediums in beide Fließrichtungen (17, 17') , einschließlich der zugehörigen Druckentlastung.
